# EUROPEAN PATENT APPLICATION

(11) **EP 1 731 885 A2**
(43) Date of publication of application: **13.12.2006**
(21) Application number: 06076811.6
(22) Date of filing: 29.04.1999
(51) Int. Cl.: G01H 1/00, A01J 5/007

(54) **A piezo-sensor**

(30) Priority: 01.05.1998 NL 1009052; 21.10.1998 NL 1010369
(62) Divisional of application: 99201330.0
(71) Applicant: MAASLAND N.V., 3147 PS Maassluis (NL)
(72) Inventor: Oort, DIck Marius, 3813 CL Amersfoort (NL); van den Berg, Karel, 2971 BR Bleskensgraaf (NL)
(74) Representative: Corten, Maurice Jean F.M.

(57) **Abstract**

The invention relates to a sensor for measuring the amplitude difference and/or the intensity value of sound, said sensor being provided with a piezo-sensor (4), such as a piezoelectric transducer (12), characterized in that the sensor (4) comprises a housing (5) which is made of a material having a strongly absorbing capacity for sound and/or vibrations, such as silicones, for example, while at least one piezoelectric sensor (12) is embedded in said housing (5).

## Description

The invention relates to a sensor for measuring the amplitude difference and/or the intensity value of sound, said sensor being provided with a piezo-sensor, such as a piezoelectric transducer, characterized in that the sensor comprises a housing which is made of a material having a strongly absorbing capacity for sound and/or vibrations, such as silicones, for example, while at least one piezoelectric sensor is embedded in the housing. Using a strongly absorbing material prevents ambient sound from affecting and/or disturbing the measurement. For the purpose of obtaining a proper measurement, the piezo-sensor should be disposed relatively closely to a wall of the housing. In this manner the sound and/or the vibrations to be measured are transmitted as optimally as possible to the piezo-sensor. It will be obvious that besides silicones an other suitable material may be applied as well. According to again another inventive feature, the piezo-sensor comprises a guide element extending as far as near a wall of the housing or extending through said wall. The guide element enables to embed the piezo-sensor in the absorbing material at a greater distance from the wall, without deteriorating a proper transmission of the sound and/or the vibrations to the piezo-sensor. In an embodiment of the invention, the guide element is designed as a recording needle that is connected to the piezoelectric transducer.

According to another inventive feature, the piezo-sensor is disposed in a chamber or closable cavity in the housing. In a preferred embodiment of the invention, said chamber or closable cavity is dimensioned in such a manner that it also comprises an air chamber. The presence of such an air chamber simplifies the vibration of the piezoelectric sensor, thus enabling an optimal measurement. According to again another aspect of the invention, the piezo-sensor bears on a liquid or viscous layer, such as vaseline or gel, for example, having a relatively good conductivity for vibrations and/or sound. Because of the fact that the layer is liquid or viscous, the housing and the piezoelectric sensor perfectly fit, unevennesses both in the wall of the housing and in a wall of the sensor being perfectly filled by the layer. When the sensor is designed so as to have a closable cavity, according to an inventive feature the sensor comprises a closing element, such as a cap, for example, by means of which the cavity can be insulated from ambient sound. In a preferred embodiment of the invention, the closing element as well as the housing are made of a strongly absorbing material. In order to realize a proper transmission of the sound and/or the vibrations to the piezo-sensor, according to an inventive feature, the closing element is designed as a pressure cap. In accordance with a further inventive feature, the pressure cap comprises a pressure portion acting on an other part of the sensor than the measuring element thereof.

Besides the fact that the above-mentioned sensor can be fastened to a part to be measured, such as a bearing housing, for example, e.g. by clamping the housing thereto, according to another inventive feature it is also possible to provide the housing with a duct through which a liquid and/or a gas can flow. In this manner it is possible to carry out acoustical measurements in the liquid and/or gas flow through the housing. In order to minimize the influence of the ambient sound on the measurement and/or to enable a proper measurement at a relatively low rate of flow of the liquid and/or the gas, according to an inventive feature, it is advantageous that in or near the duct there is provided a flow disturbing element affecting the liquid and/or gas flow in at least part of the duct. Because of the fact that the liquid and/or the gas is caused to whirl by said flow disturbing element, a better measurement can be obtained. Besides the flow disturbing element being constituted by an additional element, the positioning of the sensor, e.g. closely to a bend in a line system, may also produce such a disturbing effect.

In a preferred embodiment of the invention, the flow disturbing,element comprises a sensor for a further measurement, such as a temperature or conductivity sensor, for example.

The invention also relates to a method of acoustically monitoring the course of a process, in which method the amplitude difference and/or the intensity value of sound are/is measured during the process, and the amplitudes and/or the intensity values of the sound and/or the vibrations are measured continuously or with an adjustable frequency by means of a sound and/or vibration sensor, such as a piezoelectric transducer, during the entire process or part of the process and are compared mutually and/or with a predetermined threshold value and/or reference value and/or reference pattern for the purpose of drawing, on the basis thereof, conclusions in relation to the progress and/or the course of the process and/or the presence of disturbances and/or deviations in the course of the process. It has appeared that by means of a piezoelectric transducer, utilized in this case as a microphone, it is possible to establish in a very simple manner whether the process is carried out satisfactorily.

According to an inventive feature, the threshold value is adjusted depending on what process has been started up and/or depending on the stage of the process. It has appeared that the above-mentioned method can in particular be applied very well when monitoring a milking process by measuring by means of the piezoelectric transducer, in part of the milk line system or in a teat cup, the amplitude and/or the intensity value of the sound that is produced by the air flow in the teat cup and/or in the milk line system when said teat cup is not connected and a milk vacuum has been applied in the milk line system, which amplitude and/or intensity value are/is recorded as a reference value and/or reference pattern for the purpose of deducing therefrom whether or not a teat cup has been correctly connected to a teat. According to again another inventive feature, it is possible to check the piezoelectric transducer by comparing said reference value and/or reference pattern after some time with newly obtained values and/or patterns. Furthermore it is possible to determine, on the basis of this threshold value, whether a teat cup is disconnected abruptly from a teat or has not been connected quite properly to the teat, as in the first case during the abrupt disconnection there is immediately obtained a high amplitude and/or intensity value which is approximately comparable to the threshold value, whereas in the second case there can indeed be observed an increase in amplitude which, however, is not as high as the threshold value.

The invention also relates to a milking implement comprising a milk line system and teat cups, characterized in that the milking implement is suitable for the application of the above-described method and is provided with a sensor as described above. In the case of a milking process being monitored, it is possible to provide such a sensor in one or more of the milk tubes of a teat cup. When such a sensor has been disposed in each of the teat cups or in each of the milk tubes, it is possible to obtain per udder quarter information regarding the course of the milking process. For example, there can be checked per teat cup whether it is leaking air, i.e. has not properly been connected or has been kicked off unexpectedly. Additionally it is possible to obtain an indication as to in what stage the milking process is at a given moment. For example, the foremilking, main milking and stripping stage can clearly be distinguished from each other. According to a further aspect of the invention, in this manner it is possible to adapt the aforementioned reference value and/or reference pattern and/or threshold value to the milking cycle itself, i.e. to choose an other value or an other pattern for foremilking, main milking and stripping, or to adapt the above-mentioned values and/or patterns per animal or per group of animals. In this manner it is possible to obtain a highly accurate measurement and consequently a highly accurate monitoring specifically per teat or per animal or per group of animals. The aforementioned method and sensor are particularly suitable for a milking implement that is provided with a milking robot for automatically connecting teat cups to an animal to be milked, because with such a milking robot a supervising operator is not always present. Therefore, it is possible to monitor the milking process acoustically by means of the above-mentioned method and sensor without the presence of an operator.

The invention will now be explained in further detail with reference to the accompanying drawings in which:
Figure 1 shows a teat cup with part of a milk line system in which the sensor according to the invention is included;
Figure 2 is a cross-section of the sensor according to Figure 1, and
Figure 3 is a plan view according to the arrows III - III in Figure 2.

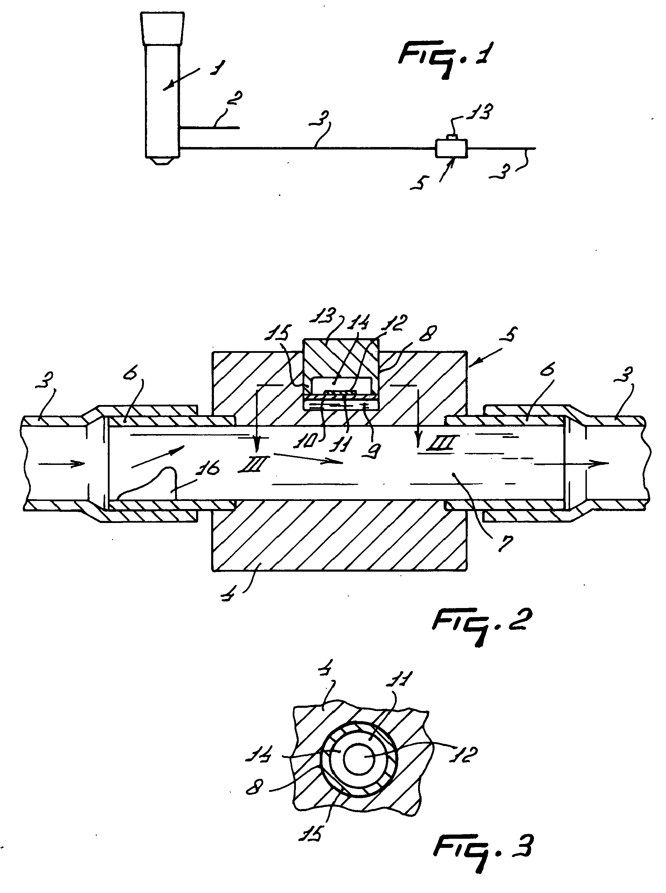

Figure 1 shows a teat cup 1 that is provided with a pulse tube 2 and a milk tube 3. In the milk tube 3 there is included a sensor 4 for measuring amplitude difference and/or intensity value of sound. The teat cup 1 may constitute part of an automatic milking implement comprising a milking robot for automatically connecting teat cups to the teats of an animal to be milked.

Figure 2 is a cross-section of the sensor 4 according to Figure 1. The sensor 4 comprises a housing 5 which is made of a material having a strongly absorbing capacity for sound and/or vibrations. On both sides of the housing 5 there are disposed two nipples 6 to which the milk tube 3 is connected. In the housing 5 there is further disposed a duct 7 through which the milk and/or cleaning liquid and/or air can flow. As shown in Figures 2 and 3, in the housing 5 there is further provided a cylindrical cavity 8 extending as far as near the duct 7. A liquid or viscous layer 9 having a good conductivity for sound and/or vibrations is disposed in the lower side of the cylindrical housing 8. This layer 9 may consist e.g. of vaseline. On the layer 9 there is provided a piezo-sensor 10 comprising a round brass plate 11 and a piezoelectric transducer 12 disposed thereon. In this case the piezoelectric transducer 12 is constituted by a crystal. The cylindrical cavity 8 is further closed by means of a closing element 13, which, in the present embodiment, is designed as a pressure cap. Near its lower side the pressure cap 13 is provided with a recess 14 having such dimensions that the piezoelectric transducer 12 is disposed in an air chamber. As shown in Figures 2 and 3, near its lower side the closing cap 13 comprises a ring-shaped pressure portion 15 by means of which the round brass plate 11 can be pressed on the layer 9, in such a manner that there is a good contact between the layer 9 and the round brass plate 11.

In one of the nipples 6 there is further disposed a flow disturbing element 16 by means of which the laminar flow across at least part of the duct 7 is caused to whirl. In the present embodiment the flow disturbing element 16 comprises a (non-shown) temperature and/or conductivity sensor.

## Claims

1. A sensor for measuring the amplitude difference and/or the intensity value of sound, said sensor being provided with a piezo-sensor (4), such as a piezoelectric transducer (12), **characterized in that** the sensor (4) comprises a housing (5) which is made of a material having a strongly absorbing capacity for sound and/or vibrations, such as silicones, for example, while at least one piezoelectric sensor (12) is embedded in said housing (5).

2. A sensor as claimed in claim 1, **characterized in that** the piezo-sensor (10) is disposed relatively closely to a wall of the housing (5).

3. A sensor as claimed in claim 1 or 2, **characterized in that** the piezo-sensor (10) comprises a guide element extending as far as near a wall of the housing (5) or extending through said wall.

4. A sensor as claimed in any one of the preceding claims, **characterized in that** the piezo-sensor (10) is disposed in a chamber or closable cavity (8) in the housing (5).

5. A sensor as claimed in claim 4, **characterized in that** the chamber or closable cavity (8) is dimensioned in such a manner that it also comprises an air chamber (14).

6. A sensor as claimed in any one of the preceding claims, **characterized in that** the piezo-sensor (10) bears on a liquid or viscous layer (9), such as vaseline or gel, for example, having a relatively good conductivity for vibrations and/or sound.

7. A sensor as claimed in any one of the preceding claims, **characterized in that** the closable cavity (8) can be closed by means of a closing element (13), such as a cap, for example.

8. A sensor as claimed in claim 7, **characterized in that** the closing element (13) as well as the housing (5) are made of a strongly absorbing material.

9. A sensor as claimed in claim 7 or 8, **characterized in that** the closing element (13) is designed as a pressure cap for the piezo-sensor (10).

10. A sensor as claimed in claim 9, **characterized in that** the pressure cap comprises a pressure portion (15) acting on an other part of the sensor (10) than the measuring element (12) thereof.

11. A sensor as claimed in any one of the preceding claims, **characterized in that** the housing (5) is provided with at least one duct (7) through which a liquid and/or a gas can flow.

12. A sensor as claimed in claim 11, **characterized in that** in or near the duct (7) there is provided a flow disturbing element (16) affecting the liquid and/or gas flow in at least part of the duct (7).

13. A sensor as claimed in claim 12, **characterized in that** the flow disturbing element (16) comprises a sensor, such as a temperature or conductivity sensor, for example.

14. A method of acoustically monitoring the course of a process, in which method the amplitude difference and/or the intensity value of sound are/is measured during the process, and the amplitudes and/or the intensity values of the sound and/or the vibrations are measured continuously or with an adjustable frequency by means of a sound and/or vibration sensor (4), such as a piezoelectric transducer (12), during the entire process or part of the process and are compared mutually and/or with a predetermined threshold value and/or reference value and/or reference pattern for the purpose of drawing, on the basis thereof, conclusions in relation to the progress and/or the course of the process and/or the presence of disturbances and/or deviations in the course of the process.

15. A method as claimed in claim 14, **characterized in that** the threshold value is adjusted depending on what process has been started up and/or depending on the stage of the process.

16. A method as claimed in claim 14 or 15, **characterized in that**, if the process is a milking process, in part of the milk line system and/or in a teat cup (1), by means of the piezoelectric transducer (12) the amplitude and/or the intensity value are/is measured of the sound that is produced by the air flow in the teat cup (1) and/or in the milk line system when said teat cup (1) is not connected and a milk vacuum has been applied in the milk line system, which amplitude and/or intensity value are/is recorded as a reference value and/or reference pattern for the purpose of deducing therefrom whether or not a teat cup (1) has been correctly connected to a teat.

17. A sensor (4) for measuring the amplitude difference and/or the intensity value of sound, said sensor being provided with a piezoelectric transducer (12) that is adapted to the application of the method as claimed in any one of claims 14 - 16.

18. A milking implement comprising a milk line system and teat cups, **characterized in that** the milking implement is suitable for the application of the method as claimed in any one of claims 14 - 16 and/or is provided with a sensor as claimed in any one of claims 13 - 17.

19. A milking implement as claimed in claim 18, **characterized in that** said milking implement is provided with a milking robot for automatically connecting teat cups to an animal to be milked.
